# EUROPÄISCHE PATENTSCHRIFT

(11) **EP 0 848 634 B1**
(45) Veröffentlichungstag und Bekanntmachung des Hinweises auf die Patenterteilung: **16.06.1999**
(21) Anmeldenummer: 96924699.0
(22) Anmeldetag: 25.07.1996
(51) Int. Cl.: B01D 1/26, C01F 7/06

(54) **VERFAHREN ZUM BETRIEB EINER EINDAMPFANLAGE UND EINDAMPFANLAGE ZUR DURCHFÜHRUNG DES VERFAHRENS**
PROCESS FOR OPERATING AN EVAPORATOR AND EVAPORATOR FOR ITS IMPLEMENTATION
PROCEDE PERMETTANT DE FAIRE FONCTIONNER UNE INSTALLATION D'EVAPORATION, ET INSTALLATION D'EVAPORATION POUR LA MISE EN OEUVRE DE CE PROCEDE

(30) Priorität: 25.07.1995 AT 126295
(43) Veröffentlichungstag der Anmeldung: 24.06.1998
(73) Patentinhaber: AUSTRIAN ENERGY & ENVIRONMENT SGP/WAAGNER-BIRO GmbH, A-1211 Wien (AT)
(72) Erfinder: SCHNEIDER, Franz, A-8021 Graz (AT)
(86) Internationale Anmeldenummer: AT9600134
(87) Internationale Veröffentlichungsnummer: WO9704849

(56) Entgegenhaltungen:
- FR-A- 1 431 037
- FR-A- 2 545 372

## Beschreibung

Die Erfindung betrifft ein Verfahren zum Betrieb einer mehrstufigen, insbesondere vierstufigen, Eindampfanlage, in welcher das einzudampfende Produkt, wie 10 %ige Natronlauge, im Gleichstrom mit dem Heizmedium, wie z.B. Brüdendampf, bei fallendem Druck und fallender Temperatur geführt wird und das Produkt durch Beheizung und Entspannung konzentriert wird sowie eine mehrstufige Eindampfanlage zur Durchführung des Verfahrens.

Aus der FR-A-2 545 372 ist ein Verfahren zur Eindampfung eines Lösungsmittels und Rückgewinnung eines flüchtigen Bestandteils des Lösungsmittels bekannt, bei dem mit Brüdendampf durch Brüdenkompression beheizt wird, wobei durch Trennung der einzelnen Stufen eine Trennung zwischen mit dem flüchtigen Stoff angereichertem und gereinigtem Brüdenkondensat erreicht wird.

Gattungsgemäße Anlagen werden aus verschiedenen Gründen im Gleichstrom unter fallendem Druck betrieben. Zum einen ist es oft notwendig die Produkttemperatur zu begrenzen (schonende Eindampfung, insbesondere bei Lebensmittel oder organischen Lösungen), zum anderen sind höher konzentrierte Lösungen bei höheren Temperaturen meist aggressiver (z. B. bei Säuren oder Laugen).

Die Größe der Wärmetauschflächen wird unter anderem durch die jeweilige Temperaturdifferenz zwischen Heizdampftemperatur und Produkttemperatur bestimmt und dies ist letzten Endes bestimmend für den Preis der Anlage.

In folgenden Beispielen ergeben sich für die, als beste Lösung, vierstufige Eindampfung einer 10 %igen wässrigen NaOH Lösung nachstehende thermodynamische Werte:

| | Stufe 1 | Stufe 2 | Stufe 3 | Stufe 4 | Summe |
|---|---|---|---|---|---|
| Konzentration % | 14 | 22 | 33 | 51 | |
| Heizdampftemp. °C | 145 | 137 | 125 | 101 | |
| Temp. Differenz °C | 4 | 4 | 6 | 8 | 22 |
| Siedep. Erhöhung °C | 4 | 8 | 18 | 41 | |
| Brüdentemp.(Satt`)°C | 137 | 125 | 101 | 51 | |
| Produkttemp. °C | 141 | 133 | 119 | 93 | |
| Wasserverdampf. % | 36 | 32 | 19 | 13 | 100 |

Bei einer vorgegebenen Verdampfungsleistung ist die erforderliche Heizfläche umgekehrt proportional zur verfügbaren Gesamttemperaturdifferenz. Im vorgegebenen Beispiel beträgt diese 22 °C. Es ist zu beachten. daß bei hohen Konzentrationen des Produktes eine bedeutende Siedepunkterhöhung erschwerend auftreten kann, die die zur Verfügung stehende Temperaturdifferenz zwischen dem Heizdampf und dem Kühlwasser erheblich einschränkt. Da die Verdampferheizflächen den bestimmenden Kostenfaktor darstellen, ist anzustreben die Temperaturdifferenz zu erhöhen. Dies wäre möglich durch Erhöhung der Heizdampftemperatur oder Verringerung der Kühlwassertemperatur.

Diese Werte sind jedoch in den meisten Fällen nicht veränderbar. Die Erfindung hat es sich zur Aufgabe gestellt den bestehenden Nachteilen zu begegnen und durch eine besondere Schaltung durch Erhöhung der Temperaturdifferenz die Heizflächengröße zu vermindern.

Die Erfindung ist dadurch gekennzeichnet, daß das Produkt in der letzten Eindampfstufe durch getrennte hintereinander geschaltete Eindampfteile bei gleichem Druck geführt wird, die durch Brüden unterschiedlicher vorhergehender Stufen beheizt werden, wobei das Produkt die Eindampfteile hintereinander durchströmt. Ausgestaltende Erfindungsmerkmale sind im in< Unteranspruch 2 angegeben. Die erfindungsgemäße Eindampfanlage, bei der die letzte Eindampfstufe mit zwei getrennten Heizkörpern ausgerüstet ist, dessen erster Heizkörper durch den von einer vorhergehenden Eindampfstufe abströmenden Brüden und dessen zweiter Heizkörper durch einen Teilstrom des von einer vorvorhergehenden Eindampfstufe abströmenden Brüden beheizt wird, wobei jeder Heizkörper in einem Eindampfteil vorgesehen ist, und bei der beide Eindampfteile getrennte Flüssigkeitswege für die einzudampfende Flüssigkeit aufweisen, ist dadurch gekennzeichnet, daß die beiden Heizkörper hintereinander vom einzudampfenden Medium beaufschlagt werden und der ausdampfende Brüden gemeinsam gesammelt und einer Kondensationsanlage zuführbar ist.

Berechnet man nach diesem Schema die obenangeführten thermodynamischen Werte, so erhöhen sich die Temperaturdifferenzen um mehr als das Doppelte, nämlich auf 46 °C.

| | Stufe 1 | Stufe 2 | Stufe 3 | Stufe 4a | Stufe 4b | Summe |
|---|---|---|---|---|---|---|
| Konzentration % | 14 | 22 | 30 | 41 | 51 | |
| Heizdampft. °C | 145 | 134 | 119 | 91 | 119 | |
| Temp.Differenz °C | 7 | 7 | 13 | 12 | 26 | 46 |
| Siedep.Erhöhung °C | 4 | 8 | 15 | 27 | 41 | |
| Brüdent.(Sättiig.) °C | 134 | 119 | 91 | 51 | 51 | |
| Produkttemp. °C | 138 | 127 | 106 | 79 | 93 | |
| Wasserverdampf. % | 36 | 32 | 15 | 11 | 6 | 100 |

Aus diesen Werten ergibt sich eine bedeutende Heizflächenverminderung und dadurch eine Verringerung des Apparatevolumens.

Die Erfindung wird an Hand zweier Schaltbilder erklärt.

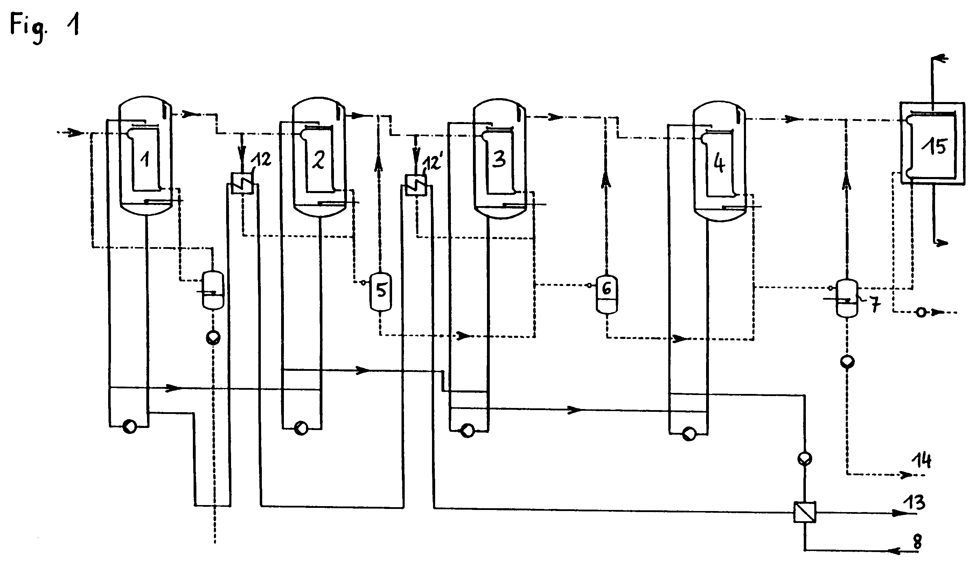

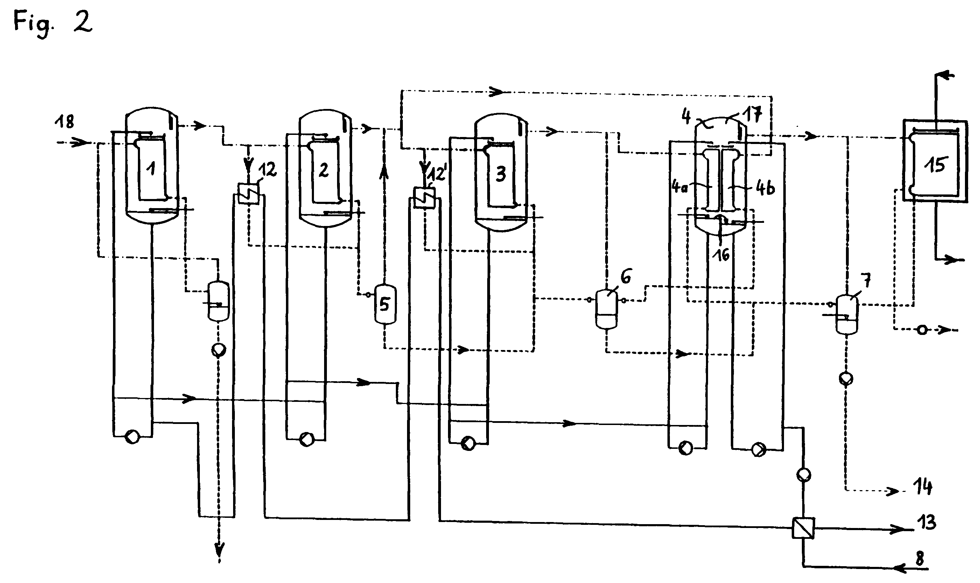

Fig.1 zeigt das Schaltbild einer bekannter Anlage mit relativ großem Heizflächenbedart. Fig. 2 zeigt das Schaltbild der erfindungsgemäßen Anlage, deren Heizflächenbedarf bei gleicher Eindampfleistung ca. die Hälfte beträgt.

In den Fig. 1 und 2 wird das einzudampfende Produkt 8 rechts unten im Schaltbild eingebracht und strömt über die Vorwärmer 12 und 12' auf Verdampfungstemperatur vorgewärmt bei erhöhtem Druck in die Stufe 1 der Eindampfanlage. Die Konzentration wird von Stufe zu Stufe von 14 % auf 51 % erhöht und der Druck stufenweise auf den Kondensatordruck aufgebaut, wobei das Wasser verdampft.

Das Produkt wird in jeder Stufe 1, 2, 3 und 4 rezirkuliert und ein Teil desselben mit vermindertem Druck der nächsten Stufe 2, 3 bzw 4 zugeführt. Das konzentrierte Produkt verläßt die Anlage bei 13.

Das verdampfte Wasser ist verunreinigt und wird daher als Brüden bezeichnet. Die erste Stufe 1 wird mit Heizdampf gemäß Pfeil 18(Fig. 2) von 145 °C beheizt. Der entstehende Brüden von 136 °C dient als Heizdampf für die nachgeschaltete Stufe 2. Der Brüden der Stufe 2 heizt Stufe 3 und der Brüden der Stufe 3 heizt Stufe 4, wobei der Brüden aus Stufe 4 im Brüdenkondensator 15 bei etwa 51° C niedergeschlagen wird. Der an den Heizflächen kondensierende Brüden wird in den Kondensatgefäßen 5, 6 und 7 gesammelt, stufenweise entspannt und verläßt die Anlage als Brüdenkondensat 14. Die Beheizung der Stufen 1, 2, 3 und 4 erfolgt somit über die im Schaltbild strichpunktiert eingezeichneten Linien. Der Produktkreislauf ist voll ausgezogen, während die Kondensatleitungen strichliert eingezeichnet sind.

Auch für die erfindungsgemäße Schaltung in Fig.2 gilt das zu Fig.1 gesagte. Nur ist die Verdampfungsstufe 4 in zwei Sektionen mit den Heizkörpern 4a und 4b unterteilt. Diese Heizkörper werden wärmemäßig unterschiedlich aus der Stufe 3 (4a) und aus der Stufe 2 (4b) beheizt. Beide Sektionen 4a und 4b können bei Verwendung von Plattenfallfilmheizflächen in einem gemeinsamen Druckgefäß 17 untergebracht werden, in welchem der an beiden Teilen entstehende Brüden, unter gemeinsamen Druck gesammelt und dem Brüdenkondensator 15 zugeführt wird. Die beiden Produktströme unterschiedlicher Konzentration werden getrennt gesammelt, durch eine Öffnung in der Zwischenwand 16 erfolgt ein über das Niveau in der niedriger konzentrierenden Sektion geregelter Abfluß, hin zu höher konzentrierenden Sektion. Das bedeutet, das daß Produkt beide Heizkörper 4a und 4b der beiden Sektionen nacheinander durchströmt. Die Konzentration des Produktes ist in beiden Sektionen unterschiedlich und damit auch die Siedepunktserhöhung. Aus der Schaltung ist ersichtlich das thermodynamisch gesehen, es sich um eine drei- und eine vierstufige Eindampfanlage handelt, wobei dreistufig einen erhöhten Frischdampfbedarf bedeutet, der allerdings, da der Verdampfüngsanteil (6 %) an den Heizkörper 4b der Stufe 4 sehr gering ist, sich nur etwa mit 2 % in der Rechnung bemerkbar macht.

Die Erfindung ermöglicht daher mit nur geringfügig erhöhtem spezifischen Dampfverbrauch eine bedeutende Heizflächenersparnis. Die Erfindung ist bei jeder Gleichstromführung des Heizdampfes mit der einzudampfenden Flüssigkeit in den letzten beiden Stufen anwendbar, soweit die Mehrstufigkeit gegeben ist. Die Erfindung ist dabei nicht auf eine vierstufige Anlage beschränkt, wobei die Ersparnisse von der Stufenzahl und natürlich von den thermodynamischen Gegebenheiten sowohl der einzudampfenden Flüssigkeit als auch von vorhandenen Heizdampf und Kühlwasser abhängen.

Wesentlich ist daß der Heizdampf in derselben Stufe eingespeist wird, wie das einzudickende Produkt, welches durch Anzapfbrüden möglichst nahe der Verdampfungstemperatur vorgewärmt wird.

Diese Schaltung kann sowohl bei Röhren- als auch bei Plattenfilmverdampfern angewendet werden und bringt auch in der Vacuumverdampfung Vorteile, sodaß neben temperaturunempfindlichen Laugen und Säuren auch temperaturempfindliche Lösungen wie Klärschlamm und auch Lebensmittel und andere organische Lösungen eingedickt werden können.

## Patentansprüche

1. Verfahren zum Betrieb einer mehrstufigen, insbesondere vierstufigen, Eindampfanlage, in welcher das einzudampfende Produkt, insbesondere 10 %ige Natronlauge, im Gleichstrom mit dem Heizmedium, insbesondere Brüdendampf, bei fallendem Druck und fallender Temperatur geführt wird und das Produkt durch Beheizung und Entspannung konzentriert wird, dadurch gekennzeichnet, daß das Produkt in der letzten Eindampfstufe (4) durch getrennte hintereinander geschaltete Eindampfteile (4a, 4b) bei gleichem Druck geführt wird, die durch Brüden unterschiedlicher vorhergehender Eindampfstufen (2, 3) beheizt werden, wobei das Produkt die Eindampfteile (4a, 4b) hintereinander durchströmt.

2. Verfahren nach Anspruch 1, dadurch gekennzeichnet, daß der zweite Eindampfteil (4b) der letzten Eindampfstufe (4) von einem Teilstrom der von der vorvorletzten Eindampfstufe (2) unter Umgehung der dazwischen liegenden Eindampfstufe (3) abströmenden Brüde beheizt wird.

3. Mehrstufige Eindampfanlage bei der die letzte Eindampfstufe (4) mit zwei getrennten Heizkörpern (4a, 4b) ausgerüstet ist, dessen erster Heizkörper (4a) durch den von einer vorhergehenden Eindampfstufe (3) abströmenden Brüden und dessen zweiter Heizkörper (4b) durch einen Teilstrom des von einer vorvorhergehenden Eindampfstufe (2) abströmenden Brüden beheizt wird, wobei jeder Heizkörper (4a, 4b) in einem Eindampfteil vorgesehen ist, und wobei beide Eindampfteile (4a, 4b) getrennte Flüssigkeitswege für die einzudampfende Flüssigkeitt aufweisen, zur Durchführung des Verfahrens nach Anspruch 1 oder 2, dadurch gekennzeichnet, daß die beiden Heizkörper (4a, 4b) hintereinander vom einzudampfenden Medium beaufschlag bar sind un der ausdampfende Brüden gemeinsam gesammelt und einer Kondensationsanlage (15) zuführbar ist.

## Claims

1. Process for operating a multi-stage, in particular four-stage, evaporating plant, in which the product to be evaporated, in particular sodium hydroxide solution, is ducted in parallel flow with the heating medium, in particular vapour, at descreasing pressure and decreasing temperature, and the product is concentrated by heating and expansion, **characterised in that** the product is in the last evaporating stage (4) ducted at equal pressure by separate series-connected evaporating elements (4a, 4b) which are heated by vapours of different upstream evaporating stages (2, 3), and the product flows one by one through the evaporating elements (4a, 4b).

2. Process according to Claim 1, **characterised in that** the second evaporating element (4b) of the last evaporating stage (4) is heated by a partial flow of the vapour which is flowing off the third but last evaporating stage (2) whilst passing around the evaporating stage (3) positioned thereinbetween.

3. Multi-stage evaporating plant, in which the last evaporating stage (4) is equipped with two separated heating elements (4a, 4b), of which the first heating element (4a) is heated by vapours flowing off an upstream evaporating stage (3) and the second heating element (4b) is heated by a partial flow of vapours flowing off a further upstream evaporating stage (2), and each heating element (4a, 4b) is provided in an evaporating element, and both evaporating stages (4a, 4b) comprise separate fluid paths for the fluid to be evaporated, for carrying out the process according to Claim 1 or 2, **characterised in that** the two heating elements (4a, 4b) are loadable one behind the other by the medium to be evaporated and the evaporating vapour is jointly collected and fed to a condensation plant.

## Revendications

1. Procédé pour la mise en service d'une installation d'évaporation en plusieurs étapes, en particulier en quatre étapes, dans lequel le produit à évaporer, en particulier de la soude caustique à 10%, est guidé sous forme d'un courant parallèle avec le milieu de chauffage, en particulier de la vapeur, en diminuant la pression et en diminuant la température, et le produit est concentré par chauffage et détente, caractérisé en ce que le produit dans la dernière étape d'évaporation (4) est guidé en étant soumis à une pression égale a travers des éléments d'évaporation (4a, 4b) séparés et montés l'un derrière l'autre, qui sont chauffés par des vapeurs chaudes de différentes étapes d'évaporation précédentes (2, 3), dans lequel le produit traverse successivement les éléments d'évaporation (4a, 4b).

2. Procédé selon la revendication 1, caractérisé en ce que le deuxième élément d'évaporation (4b) de la dernière étape d'évaporation (4) est chauffé par un courant partiel de vapeurs s'écoulant depuis l'antépénultième étape d'évaporation (2) en contournant l'étape d'évaporation intercalée (3).

3. Installation d'évaporation en plusieurs étapes dans laquelle la dernière étape d'évaporation (4) est équipée de deux corps de chauffe séparés (4a, 4b) dont le premier corps de chauffe (4a) est chauffé par les vapeurs s'écoulant depuis une étape d'évaporation précédente (3) et dont le second corps de chauffe (4b) est chauffé par un courant partiel de vapeurs s'écoulant depuis une antépénultième étape d'évaporation (2), dans lequel chaque corps de chauffe (4a, 4b) est prévu dans un élément d'évaporation, et dans lequel les deux éléments d'évaporation (4a, 4b) présentent des voies d'écoulement séparées pour le liquide à évaporer, pour la mise en oeuvre du procédé selon la revendication 1 ou 2, caractérisée en ce que les deux corps de chauffe (4a, 4b) peuvent être sollicités l'un derrière l'autre par le milieu qui doit être évaporé et les vapeurs mettant en oeuvre l'évaporation sont rassemblées de manière conjointe et peuvent être acheminées à une installation de condensation (15).
